(19) Europäisches Patentamt
European Patent Office
Office européen des brevets

(11) EP 2 184 624 A1

(12) EUROPEAN PATENT APPLICATION
published in accordance with Art. 153(4) EPC

(43) Date of publication:
12.05.2010 Bulletin 2010/19

(21) Application number: 08792803.2

(22) Date of filing: 25.08.2008

(51) Int Cl.:
G02B 1/04 (2006.01) C08G 64/16 (2006.01)

(86) International application number:
PCT/JP2008/065614

(87) International publication number:
WO 2009/028699 (05.03.2009 Gazette 2009/10)

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(30) Priority: 27.08.2007 JP 2007219580

(71) Applicant: Teijin Chemicals, Ltd.
Chiyoda-ku
Tokyo 100-0013 (JP)

(72) Inventor: TSUNEMORI, Hideyuki
Tokyo 100-0013 (JP)

(74) Representative: Albrecht, Thomas
Kraus & Weisert
Patent- und Rechtsanwälte
Thomas-Wimmer-Ring 15
80539 München (DE)

# (54) LENS AND OPTICAL UNIT USING THE SAME

(57) It is an object of the present invention to provide a lens having small birefringence, large refraction and excellent transparency and heat resistance and an optical unit including the lens.

The present invention is a lens obtained from a polycarbonate copolymer (I) which is composed of a unit (A) represented by the following formula:

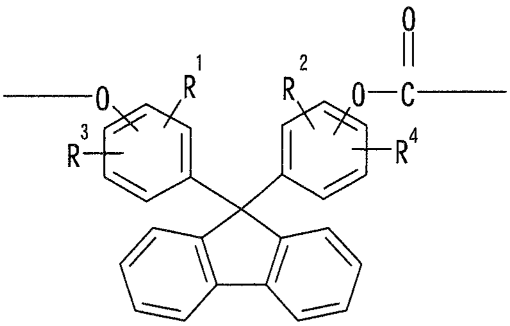

(A)

($R^1$ to $R^4$ are each independently a hydrogen atom, hydrocarbon group having 1 to 9 carbon atoms or halogen atom) and a unit (B) represented by the following formula:

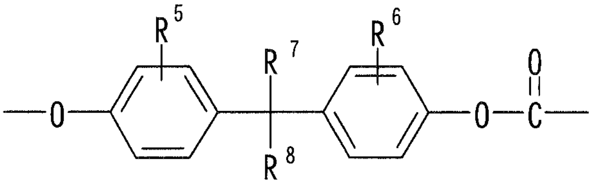

(B)



Printed by Jouve, 75001 PARIS (FR)

(Cont. next page)

(plurality of $R^5$ and $R^6$ are each independently a hydrogen atom or the like, and $R^7$ and $R^8$ are each independently a hydrogen atom or alkyl group having 1 to 9 carbon atoms, with the proviso that the total number of carbon atoms of $R^7$ and $R^8$ is 9 or 10),
the content of the unit (A) being 50 to 80 mol% of the total of all the units,
and an optical unit including the lens.

**Description**

TECHNICAL FIELD

The present invention relates to a lens obtained from a polycarbonate copolymer and to an optical unit including the same. More specifically, it relates to a lens obtained from a polycarbonate copolymer having extremely small birefringence and excellent transparency and to an optical unit including the same.

BACKGROUND OF THE ART

Polymethyl methacrylate is widely used as an optical material for lenses and light guide plates because it has high transparency and low birefringent properties. However, under the present situation where demand for the improvement of the heat resistance of a resin is growing from the viewpoint of the increasing density and safety of electronic devices, it is hard to say that polymethyl methacrylate has sufficiently high heat resistance.

Meanwhile, a polycarbonate obtained from bisphenol A has excellent transparency, heat resistance, mechanical properties and dimensional stability and is therefore used in various fields such as optical materials. However, the polycarbonate obtained from bisphenol A has large birefringence caused by the orientation of its molecular chain and large optical distortion caused by the residual stress generated at the time of molding, it was not easy to use it in lenses which require optical accuracy.

To improve the birefringence of the polycarbonate, there is proposed a method of graft copolymerizing it with a styrene-based resin (Patent Documents 1 and 2). However, a graft copolymer of the polycarbonate and the styrene-based resin has low mechanical strength and is extremely fragile. Further, as its heat stability is low and it is difficult to mold it, its molecular weight must be increased to improve its mechanical strength. However, when the molecular weight is increased, moldability and surface accuracy degrade and a lens suitable for practical use cannot be obtained.

To improve this, there is proposed a method of mixing together a polycarbonate obtained from bis(4-hydroxy-3,5-dimethylphenyl)propane and an acrylonitrile-styrene copolymer (Patent Document 3). Although this resin composition has improved transparency and birefringence, its heat stability is low, thereby making it extremely difficult to mold it.

Meanwhile, it is proposed to use a polycarbonate copolymer having excellent heat resistance and a high refractive index and containing a fluorene skeleton in lenses (Patent Document 4). However, this polycarbonate copolymer has high birefringence.

Further, there is proposed an optical disk which is obtained from a polycarbonate copolymer containing a fluorene skeleton and has improved water absorption and deformation at the time of high-speed rotation (Patent Documents 5 and 6).

It is also proposed to correct color aberration by combining a plastic lens obtained from an alicyclic polyolefin with a lens obtained from a polycarbonate copolymer containing a fluorene skeleton to fabricate an optical unit comprising a plurality of lenses (Patent Document 7). However, this polycarbonate copolymer has a defect that when the content of the fluorene skeleton is increased, its birefringence lowers but its glass transition temperature rises in a region where the birefringence becomes the lowest, thereby reducing its moldability.

(Patent Document 1) JP-A 61-19630
(Patent Document 2) JP-A 63-15822
(Patent Document 3) JP-A 05-027101
(Patent Document 4) JP-A 06-018701
(Patent Document 5) JP-A 2005-272691
(Patent Document 6) JP-A 2006-328106
(Patent Document 7) JP-A 2005-309109

DISCLOSURE OF THE INVENTION

It is an object of the present invention to provide a lens having small birefringence and a high refractive index. It is another object of the present invention to provide a lens having excellent transparency and heat resistance. It is still another object of the present invention to provide an optical unit having corrected color aberration and high resolution.

The inventors of the present invention found that a polycarbonate copolymer (I) composed of a unit (A) containing a fluorene ring and a unit (B) obtained by modifying the alkylidene moiety of bisphenol A with a long-chain alkyl has extremely small birefringence and a high refractive index. They also found that the polycarbonate copolymer (I) has low melt viscosity and is easily molded and extremely excellent as a lens material even when it contains high proportion of the unit (A), such as 50 to 80 mol%. They further found that the polycarbonate copolymer (I) has excellent heat resistance as it contains the fluorene ring in a high ratio.

It was found that a lens obtained from the polycarbonate copolymer (I) has an Abbe number of about 20 to 30 and when it is combined with a lens having an Abbe number of 45 to 60, an optical unit having corrected color aberration and high resolution is obtained. The present invention has been accomplished based on these findings.

That is, the present invention is a lens obtained from a polycarbonate copolymer (I) (may be referred to as "PC (I)" hereinafter) which is composed of a unit (A) represented by the following formula:

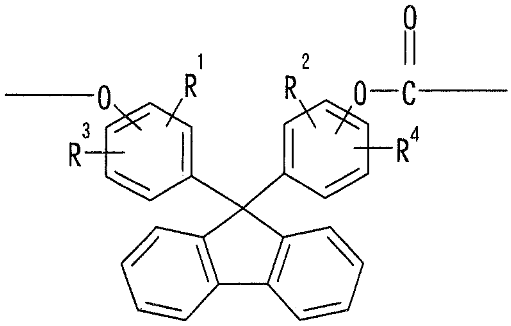

(A)

($R^1$ to $R^4$ are each independently a hydrogen atom, hydrocarbon group having 1 to 9 carbon atoms which may contain an aromatic group, or halogen atom) and a unit (B) represented by the following formula:

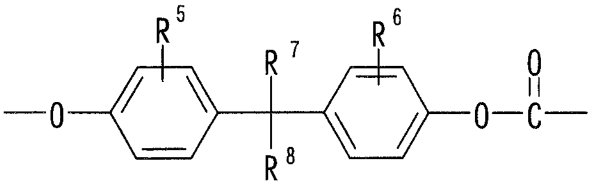

(B)

($R^5$ and $R^6$ are each independently a hydrogen atom, alkyl group having 1 to 6 carbon atoms, aryl group having 6 to 10 carbon atoms or alkoxy group having 1 to 6 carbon atoms, and $R^7$ and $R^8$ are each independently a hydrogen atom or alkyl group having 1 to 9 carbon atoms, with the proviso that the total number of carbon atoms of $R^7$ and $R^8$ is 9 or 10),

the content of the unit (A) being 50 to 80 mol% of the total of all the units.

The present invention includes an optical unit including the above lens and a plastic lens having an Abbe number of 45 to 60.

BRIEF DESCRIPTION OF THE DRAWINGS

Fig. 1 is a schematic diagram showing an optical unit including lenses which are integrated by holders; and
Fig. 2 shows a resolution evaluation system in the optical unit.

Explanation of reference numerals

1 First lens
2 Second lens
3 First holder
4 Second holder
5 Bonded surface
6 Optical axis

7 Lens unit
8 MTF measuring unit
9 Personal computer
10 Video output
11 Evaluation image

BEST MODE FOR CARRYING OUT THE INVENTION

The present invention will be described in detail hereinunder.

<polycarbonate copolymer (I): PC(I)>

(unit (A))

PC(I) has the unit (A) represented by the following formula.

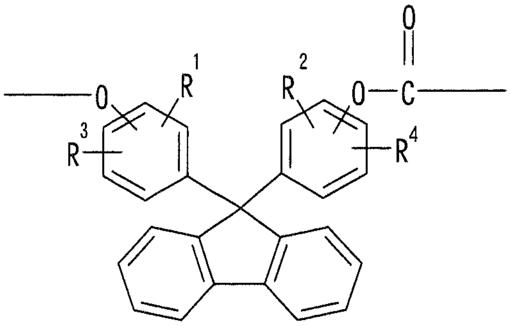

(A)

$R^1$, $R^2$, $R^3$ and $R^4$ in the unit (A) are each independently a hydrogen atom, hydrocarbon group having 1 to 9 carbon atoms or halogen atom. Examples of the hydrocarbon group having 1 to 9 carbon atoms include alkyl groups having 1 to 9 carbon atoms and aryl groups having 6 to 12 carbon atoms. The alkyl groups include methyl group, ethyl group, propyl group, butyl group, hexyl group and octyl group. The aryl groups include phenyl group and naphthyl group. Examples of the halogen atom include fluorine atom, chlorine atom and bromine atom. Preferably, $R^1$, $R^2$, $R^3$ and $R^4$ are each independently a hydrogen atom, alkyl group having 1 to 3 carbon atoms or phenyl group.

Preferred examples of the unit (A) include units derived from 9,9-bis(4-hydroxy-3-methylphenyl)fluorene, 9,9-bis(4-hydroxy-3-ethylphenyl)fluorene and 9,9-bis(4-hydroxy-2-methylphenyl)fluorene.

(unit (B))

PC(I) has the unit (B) represented by the following formula.

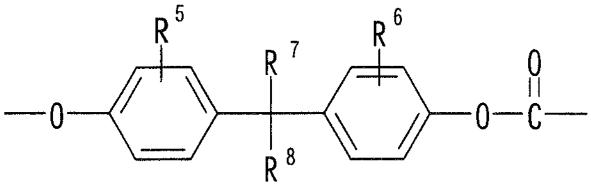

(B)

$R^5$ and $R^6$ in the unit (B) are each independently a hydrogen atom, alkyl group having 1 to 6 carbon atoms, aryl group having 6 to 10 carbon atoms or alkoxy group having 1 to 6 carbon atoms. Examples of the alkyl group having 1 to 6 carbon atoms include methyl group, ethyl group, propyl group, butyl group and hexyl group. Examples of the aryl group having 6 to 10 carbon atoms include phenyl group and naphthyl group. Examples of the alkoxy group having 1 to 6 carbon atoms include methoxy group, ethoxy group, propoxy group, butoxy group and hexyloxy group.

$R^7$ and $R^8$ are each independently a hydrogen atom or alkyl group having 1 to 9 carbon atoms. The total number

of carbon atoms of $R^7$ and $R^8$ is 9 or 10. Examples of the alkyl group having 1 to 9 carbon atoms include methyl group, ethyl group, propyl group, butyl group, hexyl group and octyl group.

The unit (B) is preferably a unit in which $R^5$ and $R^6$ are hydrogen atoms. Examples of the unit (B) include units derived from 1,1-bis(4-hydroxyphenyl)decane, 1,1-bis(3-methyl-4-hydroxyphenyl)decane and 1,1-bis(2,3-dimethyl-4-hydroxyphenyl)decane.

PC (I) is preferably such that the unit (A) is a unit derived from 9,9-bis(4-hydroxy-3-methylphenyl)fluorene and the unit (B) is a unit derived from 1,1-bis(4-hydroxyphenyl)decane.

The content of the unit (A) is preferably 50 to 80 mol%, more preferably 55 to 75 mol%, much more preferably 65 to 75 mol% of the total of all the units. When the content of the unit (A) is lower than 50 mol%, the glass transition temperature lowers and the moldability improves but the absolute value of intrinsic birefringence and the photoelastic coefficient become large with the result of large birefringence. When the content of the unit (A) is higher than 80 mol%, the photoelastic coefficient becomes small but the absolute value of intrinsic birefringence becomes large with the result of large birefringence. Since the glass transition temperature becomes high, the moldability becomes insufficient for producing a lens. The unit (A) and the unit (B) differ from each other in the plus sign or minus sign of the intrinsic birefringence value, and when they are coexistent, birefringence caused by orientation can be reduced.

(PC(I) production method)

PC(I) can be produced by reacting a diphenol for inducing the unit (A) and a diphenol for inducing the unit (B) with a carbonate precursor by a solution polymerization or melt polymerization process. PC(I) is preferably produced by the solution polymerization process, that is, interfacial polymerization process. These two different types of diphenols may be reacted with the carbonate precursor at the same time or sequentially by their type.

A unit derived from other diphenol may be copolymerized in an amount of not more than 10 mol%, preferably not more than 5 mol% as long as the object of the present invention and characteristic properties are not impaired. Typical examples of the other diphenol include hydroquinone, resorcinol, 4,4'-dihydroxydiphenyl, bis(4-hydroxyphenyl) methane, bis{(4-hydroxy-3,5-dimethyl)phenyl}methane, 1,1-bis(4-hydroxyphenyl)ethane, 1,1-bis(4-hydroxyphenyl)-1-phenylethane, 2,2-bis(4-hydroxyphenyl)propane (bisphenol-A), 2,2-bis{(4-hydroxy-3-methyl)phenyl}propane, 2,2-bis{(4-hydroxy-3,5-dimethyl)phenyl}propane, 2,2-bis{(3,5-dibromo-4-hydroxy)phenyl}propane, 2,2-bis{(3-isopropyl-4-hydroxy)phenyl}propane, 2,2-bis{(4-hydroxy-3-phenyl)phenyl}propane, 2,2-bis(4-hydroxyphenyl)butane, 2,2-bis(4-hydroxyphenyl)-3-methylbutane, 2,2-bis(4-hydroxyphenyl)-3,3-dimethylbutane, 2,4-bis(4-hydroxyphenyl)-2-methylbutane, 2,2-bis(4-hydroxyphenyl)pentane, 3,3-bis(4-hydroxyphenyl)pentane, 1,1-bis(4-hydroxyphenyl)cyclohexane, 1,1-bis(4-hydroxyphenyl)-4-isopropylcyclohexane, 1,1-(4-hydroxyphenyl)-3,3,5-trimethylcyclohexane, 1,1'-bis-(4-hydroxyphenyl)-o-diisopropylbenzene, 1,1'-bis-(4-hydroxyphenyl)-m-diisopropylbenzene, 1,1'-bis-(4-hydroxyphenyl)-p-diisopropylbenzene, 1,3-bis(4-hydroxyphenyl)-5,7-dimethyladamantane, 4,4'-dihydroxydiphenylsulfone, 4,4'-dihydroxydiphenyl sulfoxide, 4,4'-dihydroxydiphenyl sulfide, 4,4'-dihydroxydiphenyl ketone, 4,4'-dihydroxydiphenyl ether, 4,4'-dihydroxydiphenyl ester, 1,1-bis(4-hydroxyphenyl)-2-methylpropane and 2,2-bis(4-hydroxyphenyl)-4-methylpentane. They may be used alone or in combination of two or more.

The carbonate precursor is a carbonyl halide, carbonate ester or haloformate. Specific examples of the carbonate precursor include phosgene, diphenyl carbonate and dihaloformates of a diphenol. Phosgene and diphenyl carbonate are particularly preferred. To produce a polycarbonate by reacting the diphenols with the carbonate precursor by the interfacial polymerization or melt polymerization process, a catalyst, terminal capping agent and antioxidant for preventing the oxidation of a diphenol may be optionally used.

The reaction by the interfacial polymerization process is a reaction between the diphenols and phosgene in the presence of an acid binder and an organic solvent. Examples of the acid binder include alkali metal hydroxides such as sodium hydroxide and potassium hydroxide, and amine compounds such as pyridine. Examples of the organic solvent include halogenated hydrocarbons such as methylene chloride and chlorobenzene. A catalyst such as a tertiary amine, quaternary ammonium compound or quaternary phosphonium compound as exemplified by triethylamine, tetra-n-butylammonium bromide and tetra-n-butylphosphonium bromide may be used to promote the reaction. On that occasion, the reaction temperature is generally 0 to 40°C, the reaction time is about 10 minutes to 5 hours, and pH during the reaction is preferably kept at 9 or more.

(terminal capping agent)

In the polymerization reaction, a terminal capping agent is generally used. A monofunctional phenol may be used as the terminal capping agent. The monofunctional phenol is generally used to control molecular weight as a terminal capping agent, and the obtained polycarbonate is superior in heat stability to a polycarbonate which is not capped because it is capped by a group based on the monofunctional phenol. The monofunctional phenol may be what is used as a terminal capping agent for polycarbonates, generally phenol or a lower alkyl-substituted phenol represented

by the following general formula.

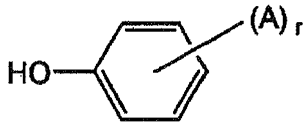

(A is a hydrogen atom, linear or branched alkyl group having 1 to 9 carbon atoms or arylalkyl group, and r is an integer of 1 to 5, preferably 1 to 3.)

Examples of the monofunctional phenol include phenol, p-tert-butylphenol, p-cumylphenol and isooctyl phenol.

Other monofunctional phenols include phenols and benzoic acid chlorides having a long-chain alkyl group or aliphatic ester group as a substituent and long-chain alkyl carboxylic acid chlorides. When the terminal of a polycarbonate copolymer is capped with them, they serve as a terminal capping agent or molecular weight control agent and also improve the melt fluidity of a resin, thereby making molding easy and improving the physical properties of a substrate. They are preferably used because they have the effect of reducing the water absorption of a resin. They are represented by the following general formulas [I-a] to [I-h].

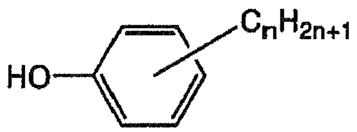

[I-a]

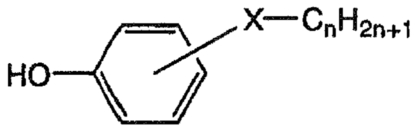

[I-b]

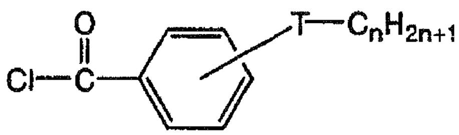

[I-c]

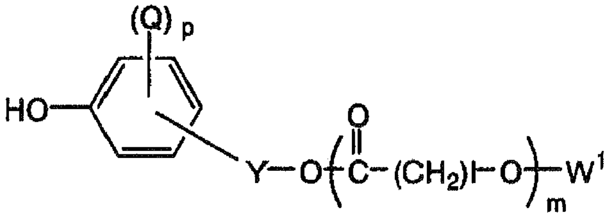

[I-d]

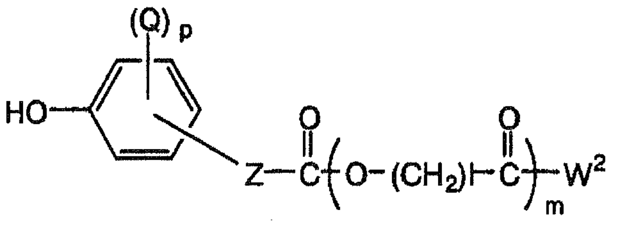

[I-e]

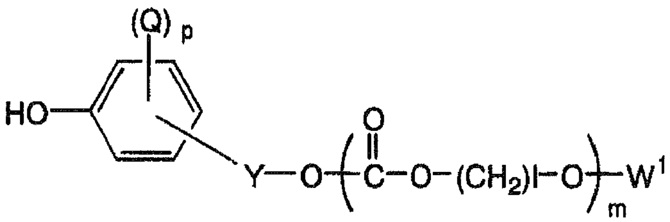

[I-f]

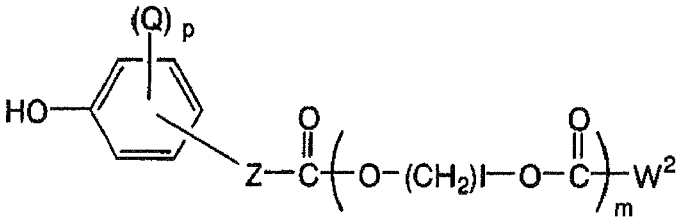

[I-g]

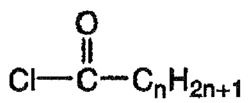

[I-h]

In the above formulas, X is -R-O-, -R-CO-O- or -R-O-CO-. R is a single bond or divalent aliphatic hydrocarbon group having 1 to 10, preferably 1 to 5 carbon atoms. T is a single bond or the same bond as X. n is an integer of 10 to 50.

Q is a halogen atom or monovalent aliphatic hydrocarbon group having 1 to 10, preferably 1 to 5 carbon atoms. p is an integer of 0 to 4. Y is a divalent aliphatic hydrocarbon group having 1 to 10, preferably 1 to 5 carbon atoms. $W^1$ is a hydrogen atom, $-CO-R^{13}$, $-CO-O-R^{14}$ or $R^{15}$. $R^{13}$, $R^{14}$ and $R^{15}$ are each a monovalent aliphatic hydrocarbon group having 1 to 10, preferably 1 to 5 carbon atoms, monovalent alicyclic hydrocarbon group having 4 to 8, preferably 5 to 6 carbon atoms, or monovalent aromatic hydrocarbon group having 6 to 15, preferably 6 to 12 carbon atoms.

l is an integer of 4 to 20, preferably 5 to 10. m is an integer of 1 to 100, preferably 3 to 60, particularly preferably 4 to 50. Z is a single bond or divalent aliphatic hydrocarbon group having 1 to 10, preferably 1 to 5 carbon atoms. $W^2$ is a hydrogen atom, monovalent aliphatic hydrocarbon group having 1 to 10, preferably 1 to 5 carbon atoms, monovalent alicyclic hydrocarbon group having 4 to 8, preferably 5 to 6 carbon atoms, or monovalent aromatic hydrocarbon group having 6 to 15, preferably 6 to 12 carbon atoms.

Out of these, the substituted phenols of the formulas [I-a] and [I-b] are particularly preferred. The substituted phenols of the formula [I-a] in which n is 10 to 30, specifically 10 to 26 are preferred. Specific examples of the substituted phenols of the formula [I-a] include decyl phenol, dodecyl phenol, tetradecyl phenol, hexadecyl phenol, octadecyl phenol, eicosyl phenol, docosyl phenol and triacontyl phenol.

Compounds in which X is -R-CO-O- and R is a single bond are preferred as the substituted phenols of the formula [I-b], and compounds in which n is 10 to 30, specifically 10 to 26 are more preferred. Specific examples of the

phenols of the formula [I-b] include decyl hydroxybenzoate, dodecyl hydroxybenzoate, tetradecyl hydroxybenzoate, hexadecyl hydroxybenzoate, eicosyl hydroxybenzoate, docosyl hydroxybenzoate and triacontyl hydroxybenzoate.

In the substituted phenols or substituted benzoic acid chlorides represented by the formulas [I-a] to [I-g], the position of the substituent is preferably a para-position or ortho-position, and a mixture thereof is preferred.

The monofunctional phenol is desirably introduced into at least 5 mol%, preferably at least 10 mol% of the total of all the terminals of the obtained PC(I). The monofunctional phenols may be used alone or in combination of two or more.

The reaction by the melt polymerization process is typically a transesterification reaction between diphenols and a carbonate ester which is carried out by mixing together the diphenols and the carbonate ester under heating in the presence of an inert gas and distilling off the formed alcohol or phenol. The reaction temperature which differs according to the boiling point of the formed alcohol or phenol is generally 120 to 350°C. The inside pressure of the reaction system is reduced to about 1,300 Pa to 13 Pa (10 to 0.1 Torr) in the latter stage of the reaction to facilitate the distillation-off of the formed alcohol or phenol. The reaction time is generally about 1 to 4 hours.

The above carbonate ester is an ester such as an aryl group having 6 to 10 carbon atoms, aralkyl group having 6 to 10 carbon atoms or alkyl group having 1 to 4 carbon atoms all of which may have a substituent. Specific examples of the carbonate ester include diphenyl carbonate, ditolyl carbonate, bis(chlorophenyl)carbonate, m-cresyl carbonate, dinaphthyl carbonate, bis(diphenyl)carbonate, dimethyl carbonate, diethyl carbonate and dibutyl carbonate. Out of these, diphenyl carbonate is particularly preferred.

A polymerization catalyst may be used to accelerate the polymerization rate. Examples of the polymerization catalyst include hydroxides of alkali metals such as sodium hydroxide and potassium hydroxide, hydroxides of alkali earth metals, boron and aluminum hydroxides, alkali metal salts, alkali earth metal salts, quaternary ammonium salts, alkoxides of alkali metals and alkali earth metals, organic acid salts of alkali metals, organic acid salts of alkali earth metals, zinc compounds, boron compounds, silicon compounds, germanium compounds, organic tin compounds, lead compounds, antimony compounds, manganese compounds, titanium compounds and zirconium compounds which are catalysts generally used for an esterification reaction and a transesterification reaction. These catalysts may be used alone or in combination of two or more. The amount of the polymerization catalyst is preferably $1 \times 10^{-9}$ to $1 \times 10^{-5}$ equivalent, more preferably $1 \times 10^{-8}$ to $5 \times 10^{-6}$ equivalent based on 1 mol of the total of all the diphenols as the raw materials.

In the polymerization reaction, to reduce the number of the phenolic terminal groups, 2-chlorophenylphenyl carbonate, 2-methoxycarbonylphenylphenyl carbonate or 2-ethoxycarbonylphenylphenyl carbonate may be preferably added in the latter stage or after the end of the polycondensation reaction. 2-methoxycarbonylphenylphenyl carbonate is particularly preferably used.

Further, a deactivator is preferably used to neutralize the activity of the catalyst in the melt transesterifiation process. The amount of the deactivator is preferably 0.5 to 50 mols based on 1 mol of the residual catalyst. The deactivator is used in an amount of preferably 0.01 to 500 ppm, more preferably 0.01 to 300 ppm, particularly preferably 0.01 to 100 ppm based on the polycarbonate after polymerization. Preferred examples of the deactivator include phosphonium salts such as tetrabutylphosphonium dodecylbenzenesulfonate and ammonium salts such as tetraethylammonium dodecylbenzalsulfate. Details of reaction patterns except for the above are well known from various documents and patent publications.

(production of resin pellet)

Considering that the use purpose of PC(I) is a lens, it is preferred that impurities and foreign matter such as unreacted components should be removed by carrying out the filtration of a solution of PC(I) after PC(I) is produced by a conventionally known commonly used process (such as solution polymerization or melt polymerization). Further, even in the extrusion step (pelletizing step) for obtaining a polycarbonate pellet to be injection molded (including injection compression molding), it is desired to remove foreign matter by letting PC(I) pass through a sintered metallic filter while it is molten. A filter having a filtration accuracy of not more than 10 $\mu$m is preferably used. Anyway, the contents of foreign matter, impurities and a solvent in the raw material resin before injection molding (including injection compression molding) must be made as low as possible.

In order to produce a pellet having a low content of foreign matter, it is preferred to install production equipment such as an extruder or pelletizer in a clean air atmosphere, reduce the content of foreign matter in cooling water for a cooling bath, and fill a raw material supply hopper, a supply flow path and a storage tank for the obtained pellet with clean air or the like. For example, the same method as proposed by JP-A 11-21357 is suitably adopted. A method for blocking oxygen by blowing an inert gas typified by nitrogen gas into an extruder can be advantageously used as means of improving color.

In the production of the above pellet, it is possible to narrow the form distribution of pellets, further reduce the number of miscut products, further reduce the amount of fine powders generated at the time of conveyance or transportation and reduce the number of cells (vacuum cells) formed in a strand or pellet by employing various methods which

have already been proposed. Thereby, the molding cycle can be increased and the incidence of a defect such as a silver streak can be further reduced.

The shape of the pellet could be any type of shape, such as columnar, rectangular column-like or spherical, but preferably columnar (including cylindroid). The diameter of the column is preferably 1 to 5 mm, more preferably 1.5 to 4 mm, much more preferably 2 to 3.3 mm. The ratio of the short diameter to the long diameter of the cylindroid is preferably not less than 60 %, more preferably not less than 65 %. The length of the column is preferably 1 to 30 mm, more preferably 2 to 5 mm, much more preferably 2.5 to 3.5 mm.

(phosphorus-based stabilizer)

PC(I) may contain at least one phosphorus compound selected from the group consisting of phosphoric acid, phosphorous acid, phosphonic acid, phosphonous acid and esters thereof in an amount of 0.0001 to 0.05 wt% based on PC (I). When this phosphorus compound is contained, the heat stability of PC(I) is improved, thereby preventing a molecular weight reduction and the deterioration of color at the time of molding.

The phosphorus compound is at least one selected from the group consisting of phosphoric acid, phosphorous acid, phosphonic acid, phosphonous acid and esters thereof. It is preferably at least one phosphorus compound selected from the following formulas (1) to (4).

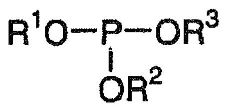

(1)

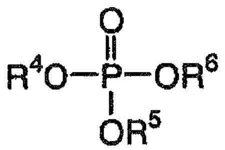

(2)

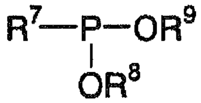

(3)

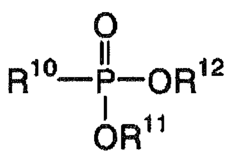

(4)

$R^1$ to $R^{12}$ are each independently a hydrogen atom, alkyl group having 1 to 20 carbon atoms such as methyl, ethyl, propyl, isopropyl, butyl, isobutyl, tert-butyl, pentyl, hexyl, heptyl, octyl, nonyl, decyl, dodecyl, hexadecyl or octadecyl, aryl group having 6 to 15 carbon atoms such as phenyl, tolyl or naphthyl, or aralkyl group having 7 to 18 carbon atoms such as benzyl or phenetyl. When two alkyl groups are existent in one compound, they may be bonded together to form a ring.

Examples of the phosphorus compound represented by the formula (1) include triphenyl phosphite, trisnonylphenyl phosphite, tris(2,4-di-tert-butylphenyl)phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phosphite, monodecyldiphenyl phosphite, monooctyldiphenyl phosphite, bis(2,6-di-tert-butyl-4-methylphenyl)pentaerythritol diphosphite, 2,2-methylenebis(4,6-di-tert-butylphenyl)octyl phosphite, bis(nonylphenyl)pentaerithritol diphosphite, bis(2,4-di-tert-butylphenyl)pentaerythritol diphosphite, bis(2,4-dicumylphenyl)pentaerythritol diphosphite and distearyl pentaerythritol diphosphite. Examples of the phosphorus compound represented by the above formula (2) include tributyl phosphate, trimethyl phosphate, triphenyl phosphate, triethyl phosphate, diphenylmonoorthoxenyl phosphate, dibutyl phosphate, dioctyl phosphate and diisopropyl phosphate. Examples of the phosphorus compound represented by the above formula (3) include tetrakis(2,4-di-tert-butylphenyl)-4,4-diphenylene phosphonite. Examples of the compound represented by the above formula (4) include dimethyl benzenephosphonate, diethyl benzenephosphonate and dipropyl benzenephosphonate. Out of these, distearyl pentaerythritol diphosphite, triethyl phosphate, dimethyl benzenephosphonate and bis(2,4-dicumylphenyl)pentaerythritol diphosphite are preferably used.

The content of the phosphorus compound is preferably 0.0001 to 0.05 wt%, more preferably 0.0005 to 0.02 wt%, much more preferably 0.001 to 0.01 wt% based on PC(I). When the content is lower than 0.0001 wt%, the above effect is hardly obtained and when the content is higher than 0.05 wt%, the phosphorus compound exerts a bad influence upon the heat stability of PC (I) and degrades the resistance to hydrolytic decomposition of PC(I) disadvantageously.

(antioxidant)

PC (I) may contain an antioxidant to prevent oxidation. The antioxidant is a phenol-based antioxidant or a lactone-based antioxidant. Examples of the phenol-based antioxidant include triethylene glycol-bis(3-(3-tert-butyl-5-methyl-4-hydroxyphenyl) propionate), 1,6-hexanediol-bis(3-(3,5-di-tert-butyl-4-hydroxyphenyl) propionate), pentaerythritol-tetrakis(3-(3,5-di-tert-butyl-4-hydroxyphenyl)propionate), octadecyl-3-(3,5-di-tert-butyl-4-hydroxyphenyl) propionate, 1,3,5-trimethyl-2,4,6-tris(3,5-di-tert-butyl-4-hydroxybenyzyl)benzene, N,N-hexamethylenebis(3,5-di-tert-butyl-4-hydroxyhydrocinnamide), 3,5-di-tert-butyl-4-hydroxy-benzylphosphonate-diethyl ester, tris(3,5-di-tert-butyl-4-hydroxybenzyl)isocyanurate and 3,9-bis{1,1-dimethyl-2-[β-(3-tert-butyl-4-hydroxy-5-methylphenyl)propionyloxy]ethyl}-2,4,8,10-tetraoxaspiro (5,5)undecane.

Examples of the lactone-based antioxidant include 5,7-di-t-butyl-3-(3,4-dimethylphenyl)-3H-benzofuran-2-one and 5,7-di-t-butyl-3-(2,3-dimethylphenyl)-3H-benzofuran-2-one. The content of the antioxidant is 0.0001 to 0.05 wt% based on the polycarbonate copolymer.

(release agent)

PC(I) may contain a higher fatty acid ester of a monohydric or polyhydric alcohol as a release agent. When PC (I) contains a higher fatty acid ester of a monohydric or polyhydric alcohol, the releasability from a metal mold of PC (I) at the time of molding is improved, thereby making it possible to prevent the deformation of a molded product by a release failure as the release load is small when an optical part is molded. The melt fluidity of PC (I) is also improved.

The higher fatty acid ester is preferably a partial or whole ester of a monohydric or polyhydric alcohol having 1 to 20 carbon atoms and a saturated fatty acid having 10 to 30 carbon atoms.

Examples of the partial ester or whole ester of a monohydric or polyhydric alcohol and a saturated fatty acid include monoglyceride stearate, monosorbitate stearate, monoglyceride behenate, pentaerythritol monostearate, pentaerythritol tetrastearate, propylene glycol monostearate, stearyl stearate, palmityl palmitate, butyl stearate, methyl laurate, isopropyl palmitate and 2-ethylhexyl stearate. Out of these esters, monoglyceride stearate and pentaerythritol tetrastearate are preferably used.

The content of the release agent is preferably 0.01 to 2 wt%, more preferably 0.015 to 0.5 wt%, much more preferably 0.02 to 0.2 wt% based on PC(I). When the content is lower than 0.01 wt%, the above effect is not obtained and when the content is higher than 2 wt%, the release agent contaminates the surface of a metal mold at the time of molding.

PC(I) may contain additives such as an optical stabilizer, a colorant, an antistatic agent and a lubricant as long as heat resistance and transparency are not impaired. To mix these additives with the polycarbonate copolymer, any means may be used. For example, they are suitably mixed together by means of a tumbler, twin-cylinder mixer, Nauter mixer, Banbury mixer, kneading roll or extruder.

(specific viscosity)

The specific viscosity measured at 20°C of a solution obtained by dissolving 0.7 g of PC (I) in 100 ml of methylene chloride is preferably 0.17 to 0.55, more preferably 0.21 to 0.45. When the specific viscosity is lower than 0.17, a molded product becomes fragile and when the specific viscosity is higher than 0.55, melt viscosity and solution viscosity become high, thereby making it difficult to handle PC(I).

(glass transition temperature)

PC (I) has a glass transition temperature (Tg) measured at a temperature elevation rate of 20°C/min of preferably 150 to 250°C, more preferably 160 to 245°C. When Tg is lower than 150°C, heat resistance becomes unsatisfactory according to the application purpose of an optical part obtained from PC (I) and when Tg is higher than 250°C, melt viscosity becomes high, thereby making molding difficult.

(photoelastic coefficient)

The photoelastic coefficient of PC(I) is preferably not more than 45 x $10^{13}$ $cm^2$/dyne, more preferably not more than 40 x $10^{13}$ $cm^2$/dyne. When the photoleastic coefficient becomes larger than 45 x $10^{13}$ $cm^2$/dyne, molding distortion generated by molding becomes large, whereby it is difficult to use the molded product as an optical member.

(orientation birefringence)

The absolute value of orientation birefringence measured by the method which will be described hereinafter of PC(I) is preferably less than 1.0 x $10^{-3}$, more preferably less than 0.5 x $10^{-3}$. When PC (I) has a birefringence within the above range, its birefringence caused by orientation becomes small and an optical member such as a lens obtained from PC(I) obtains high resolution without the reduction of image quality.

(water absorption coefficient)

PC (I) has a water absorption coefficient obtained from a weight change rate (wt%) 24 hours after a 45 mm-diameter plate molded from PC(I) is immersed in water in accordance with ASTM D-570 of preferably not more than 0.25 %. When the water absorption coefficient is larger than 0.25 %, image quality is reduced by the dimensional change of a lens by water absorption, disadvantageously.

(Abbe number)

Preferably, PC(I) has a refractive index at 589 nm of 1.600 to 1.650. Preferably, PC (I) has an Abbe number of 20 to 35. Preferably, PC(I) has a refractive index at 589 nm of 1.600 to 1.650 and an Abbe number of 20 to 35. More preferably, PC(I) has a refractive index at 589 nm of 1.610 to 1.650 and an Abbe number of 20 to 30. The refractive index at 589 nm and the Abbe number were obtained from a value obtained by measuring the refractive index with an Abbe refractometer having a wavelength selection filter as a light source by changing the wavelength to C-line (656 nm), D-line (589 nm) and F-line (486 nm) in accordance with JIS-K7142 based on the following equation.

$$\nu_D = (n_D - 1)/(n_F - n_C)$$

$\nu_D$: Abbe number
$n_D$: light refractive index at a wavelength of 589 nm
$n_F$: light refractive index at a wavelength of 486 nm
$n_C$: light refractive index at a wavelength of 656 nm

(lens)

The lens in the present invention is a pick-up lens, a camera lens, a micro-array lens, a projector lens or a Fresnel lens which is an optical element as a part of optical equipment. More specifically, it is not particularly limited if it is a lens having two spherical or aspherical refracting surfaces and capable of transmitting light. Examples of the lens include spherical lenses, aspherical lenses, pick-up lenses, camera lenses, micro-array lenses, projector lenses and Fresnel lenses.

The lens of the present invention is formed by injection molding, compression molding, injection compression molding, extrusion molding or solution casting. From the viewpoints of molding ease and cost, it is preferably formed by injection molding or injection compression molding.

(light transmittance of lens)

Preferably, the lens of the present invention has a total light transmittance at 550 nm of a molded plate of not less than 80 %. More preferably, the lens has a light transmittance of not less than 85 %. When the transmittance is lower than 80 %, it is difficult to use the lens as an optical member.

(birefringence of lens)

Preferably, the lens of the present invention satisfies the following expression when the retardation at 550 nm of a molded plate is represented by $Re_{550}$ (nm) and the thickness of the site for measuring transmittance and retardation is represented by d (mm).

$$Re_{550}\ (nm)/d\ (mm) \leqq 10 \times 10^{-6}$$

An optical element obtained from an ordinary bisphenol A type polycarbonate has a large retardation. Although this value may be reduced by molding conditions, the condition width is generally very small and therefore it is extremely difficult to mold the polycarbonate. In most cases, the above expression cannot be satisfied. Since PC(I) in the present invention has a small retardation caused by the orientation of a resin and a small molding distortion, a good optical element can be obtained without setting molding conditions strictly.

<optical unit>

The optical unit of the present invention includes the above lens obtained from PC(I) as a first lens and a lens having an Abbe number of 45 to 60 as a second lens. The Abbe number of the second lens is preferably 50 to 60.

When a lens having a different Abbe number from that of the lens obtained from PC(I) and low birefringence is used as the second lens, the effect of correcting color aberration is obtained. As for the birefringence's of the first and second lenses, the phase difference produced by vertical incidence to a 0.8 mm-thick plane-convex lens is preferably not more than 100 nm.

Lenses obtained from an alicyclic polyolefin, polymethyl methacrylate, olefin·maleimide copolymer and poly (1,3-cyclohexadiene) are preferred as the second lens. A lens obtained from an alicyclic polyolefin resin is particularly preferred.

Examples of the alicyclic polyolefin resin include norbornene-based alicyclic polyolefin resins as disclosed by JP-A 2001-072870, norbornene-based alicyclic polyolefin resins containing a methacryl group as disclosed by JP-A 2004-51949, and alicyclic polyolefin resins comprising a copolymer of ethylene and cycloolefin as disclosed by JP-A 2001-26693. Commercially available products of the alicyclic polyolefin resin include ZEONEX (registered trademark) of Zeon Corporation, ARTON (registered trademark) of JSR Corporation, and APEL (registered trademark) of Mitsui Chemicals, Inc.

Preferably, the alicyclic polyolefin has a refractive index at a wavelength of 589 nm (Na-D line) of 1.450 to 1.550 and an Abbe number of 45 to 60.

Since an optical unit which includes a plurality of lenses integrated by holders and is small in size and light in weight and inexpensive is in demand, plastic lenses are advantageously used. Particularly, an alicyclic polyolefin having excellent optical properties is used. To form an optical unit by using a lens obtained from an alicyclic polyolefin, optical design for correcting color aberration must be carried out by using the lens in combination with a lens obtained from a material which greatly differs from that of the above lens in Abbe number. Since the alicyclic polyolefin has an Abbe number of about 45 to 60, a lens obtained from PC(I) having a small Abbe number can be advantageously used.

The optical unit of the present invention can be fabricated by setting a plurality of lenses in cylindrical holders while the combination direction of the plurality of lenses is set so as to offset their birefringence's caused by orientation at the time of injection molding. New stress generated when the lenses are set in the holders, for example, stress caused by the curing shrinkage of an adhesive if the lenses are fixed by adhesion or clamping stress generated by the holders when the lenses are clamped to be fixed is applied, thereby producing new birefringence based on this stress. Therefore, a method in which a holder for accepting the first lens and a holder for accepting the second lens are formed separately and butted to each other and the holders are turned on the optical axis of one of the holder as the axis of rotation to offset the orientation birefringence's of the lenses and then connected and fixed to each other may also be used.

The optical unit preferably includes a plurality of plastic lenses having an Abbe number of 45 to 60. The optical unit of the present invention can be advantageously used as an optical unit for mobile telephones and digital cameras.

Examples

The following examples are provided for the purpose of further illustrating the present invention but are in no way to be taken as limiting. "Parts" in the examples and comparative examples means "parts by weight". Evaluations were made by the following methods.

(1) specific viscosity

The specific viscosity of a solution prepared by dissolving 0.7 g of the polymer in 100 ml of methylene chloride was measured at 20°C.

(2) glass transition point (Tg)

This was measured at a temperature elevation rate of 20°C/min by using the 2910 Type DSC of TA Instruments Japan Inc.

(3) water absorption coefficient

After 4.0 g of a polycarbonate resin was injected into a 45 mm-diameter metal mold and kept in a compression molding machine set to 280°C for 1 minute, it was cooled to room temperature while it was pressurized to obtain a 45 mm-diameter compression molded plate. Thereafter, the 45 mm-diameter compression molded plate was immersed in 23°C water for 24 hours in accordance with ASTM D-570 to measure its weight change rate (wt%) before and after immersion so as to measure its water absorption coefficient.

(4) photoelastic coefficient

5 g of the polycarbonate copolymer (I) pellet was dissolved in 100 ml of methylene chloride, and the resulting solution was cast over a flat glass plate and left for one night to form a cast film. After this film was dried at 60°C for 2 hours, a film having a length of 50 mm, a width of 20 mm and an average thickness of 150 μm was formed, and a photoelastic stage was set in the M-220 ellipsometer of JASCO Corporation to measure the photoelastic coefficient of the film. As for measurement conditions, a load of 1 N or less was applied to the film to measure its phase difference. This measurement was carried out at 5 points to calculate the photoelastic coefficient of the film from the following equation.

$$Re = F \times c \times d$$

Re: phase difference [nm]
F: stress [$N/m^2$]
c: photoelastic constant [$m^2/N$]
d: thickness [nm]

(5) Abbe number

**[0085]** The cast film formed in (4) above was used to measure its refractive index with an Abbe refractometer having a wavelength selection filter as a light source by changing the wavelength to C-line (656 nm), D-line (589 nm) and F-line (486 nm) so as to calculate the Abbe number of the film from the obtained refractive index.

(6) orientation birefringence

The polycarbonate copolymer (I) was dissolved in methylene chloride, and the obtained 15 wt% methylene chloride solution was cast over a flat glass plate to form a film having an average thickness of 60 μm and a thickness variation in the width direction of 1.1 μm. The end portions of the obtained film were cut off to obtain a sample having a width of 10 mm and a length of 100 mm which was then dried at 120°C for 2 hours to remove the methylene chloride solution. The obtained film was stretched monoaxially in the longitudinal direction at a predetermined stretching temperature of (glass transition temperature + 10°C) and a stretching rate of 15 mm/min to obtain a double stretched film having a width of 7.1 mm, an average thickness of 42 μm and a length of 200 mm. When the film was observed by a

polarizing plate, it was confirmed that the film was uniformly stretched. Thereafter, a birefringence stage was set in the ellipsometer (type: M-220) of JASCO Corporation to measure the phase difference of the film. The orientation birefringence was calculated from the obtained phase difference based on the following equation.

$$\Delta n \times 10^{-3} = Ret/d$$

Δn: orientation birefringence
Ret: phase difference [nm]
d: film thickness [μm]

(7) total light transmittance (%T)

A molded sample having a thickness of 1.0 mm, a width of 1.0 mm and a length of 2.0 mm was injection molded by using the N-20C injection molding machine of The Japan Steel Works, Ltd. The total light transmittance at 550 nm of the molded sample was measured by the U-4001 spectrophotometer of Hitachi, Ltd.

(8) phase difference ($Re_{550}$)

The vertical incident birefringence at 550 nm of the molded sample formed in (7) above was measured by the M-220 type ellipsometer of JASCO Corporation.

(9) evaluation of birefringence of plane-convex lens

A plane-convex lens having an outer diameter of 2.0 mm, a center thickness of 0.8 mm and a focal distance of 2.0 mm was injection molded by using the N-20C injection molding machine of The Japan Steel Works, Ltd. under molding conditions shown in Table 2. The phase difference at a wavelength of 590 nm of the center portion of the lens was measured by the KOBRA-CCD micro-area phase difference measuring instrument of Oji Scientific Instruments.

(10) fabrication of optical unit

The optical unit shown in Fig. 1 was fabricated by the following procedure. The first lens (1) was formed by injection molding the polycarbonate copolymer (I). The second lens (2) was formed by injection molding an alicyclic polyolefin (ZEONEX™480R of Zeon Corporation). The first lens (1) was set in a first holder (3), and the second lens (2) was set in a second holder (4). The first holder (3) and the second holder (4) were joined together. After a combination of the two lenses (1) and (2) and optical properties were optimized by turning the resulting assembly on the optical axis (6) as the center axis, the two lenses were connected and fixed by means of an adhesive and integrated by the holders. As for the specifications of the obtained lens unit, the focal distance was 5.8 mm, the F value was 2.0, the diameter of the light receiving size was 7.2 mm, the total length of the lenses was 15.4 mm, and the diameter of the lenses was 14 mm.

(11) evaluation of lens unit

The lens unit (7) was set in the MTF (Modulation Transfer Function) measuring unit (8) of Acutelogic Corporation to analyze and measure the spatial frequency characteristics of evaluation images (11) having 10 lines/mm and 30 lines/mm by the computer (9) of an evaluation system shown in Fig. 2 in accordance with the resolution measuring method specified in ISO12233. As MTF is closer to "1" at 10 lines/mm, higher contrast characteristics are obtained and as MTF is closer to "1" at 30 lines/mm, a lens having higher resolution is obtained.

Example 1

(synthesis of polycarbonate copolymer (I))

69.1 parts of a 48 % sodium hydroxide aqueous solution and 301.6 parts of ion exchange water were fed to a reactor equipped with a thermometer, stirrer and reflux condenser, 51.5 parts of 9,9-bis(4-hydroxy-3-methylphenyl) fluorene, 23.9 parts of 1,1-bis(4-hydroxyphenyl)decane and 0.15 part of hydrosulfite were dissolved in the resulting solution, 231.5 parts of methylene chloride was added to the obtained solution, and 28.0 parts of phosgene was blown into the resulting mixture at 15 to 25°C under agitation over about 60 minutes. After the blowing of phosgene ended, 8.6

parts of a 48 % sodium hydroxide aqueous solution and 1.41 parts of p-tert-butylphenol were added, stirring was resumed, the resulting solution was emulsified, and 0.07 part of triethylamine was added and further stirred at 28 to 33°C for 1 hour to terminate a reaction. After the end of the reaction, the product was diluted with methylene chloride, rinsed in water, made acidic with hydrochloric acid, rinsed in water and further rinsed in water repeatedly until the conductivity of its water phase became almost the same as that of ion exchange water to obtain a methylene chloride solution of a polycarbonate copolymer (I).

This solution was then let pass through a filter having an opening size of 0.3 μm and added dropwise to hot water in a kneader having an isolated chamber with a foreign matter ejection port in a bearing portion to make the polycarbonate copolymer (I) flaky while methylene chloride was distilled off, and the liquid-containing flake was ground and dried to obtain a powder. 0.050 % of bis(2,4-dicumylphenyl)pentaerythritol diphosphite and 0.10 % of pentaerythritol tetrastearate were added to this powder, and the resulting mixture was pelletized by means of a 30 mm-diameter single-screw vented extruder. The physical properties of the obtained polycarbonate copolymer (I) (BCF:DED = 65 mol%: 35 mol%) are shown in Table 1.

(molded sample)

After the polycarbonate copolymer (I) was dried at 120°C for 5 hours, a molded sample having a thickness of 1.0 mm, a width of 1.0 mm and a length of 2.0 mm was injection molded by using the N-20C injection molding machine of The Japan Steel Works, Ltd. under molding conditions shown in Table 2. The total light transmittance at 550 nm and birefringence of the molded sample were measured and shown in Table 2.

(lens)

The same pellet and the same molding machine were used to injection-mold a plane-convex lens having an outer diameter of 2.0 mm, a center thickness of 0.80 mm and a focal distance of 2.0 mm under molding conditions shown in Table 2. The phase difference at a wavelength of 590 nm of the sample was measured by using the KOBRA-CCD micro-area phase difference measuring instrument of Oji Scientific Instruments. The results are shown in Table 3.

(optical unit)

A lens obtained from the polycarbonate copolymer (I) was used as the first lens (1) and a lens (Abbe number of 56) obtained from an alicyclic polyolefin (ZEONEX™480R of Zeon Corporation) was used as the second lens (2) to fabricate an optical unit. The first lens (1) was set in the first holder (3), and the second lens (2) was set in the second holder (4). The first holder (3) and the second holder (4) were joined together. After a combination of the two lenses (1) and (2) and optical properties were optimized by turning the resulting assembly on the optical axis (6) as the center axis, the two lenses were connected and fixed by means of an adhesive and integrated by the holders.

As for the specifications of the obtained optical unit, the focal distance was 5.8 mm, the F value was 2.0, the diameter of the light receiving size was 7.2 mm, the total length of the lenses was 15.4 mm, and the diameter of the lenses was 14 mm. The optical unit was set in the MTF (Modulation Transfer Function) measuring unit (8) of Acutelogic Corporation to measure the spatial frequency characteristics of an evaluation image (11) in accordance with the resolution measuring method specified in ISO12233. The results are shown in Table 4.

Example 2

A pellet of a polycarbonate copolymer (I) having characteristic properties shown in Table 1 (BCF:DED = 70 mol%: 30 mol%) was obtained in the same manner as in Example 1 except that 55.4 parts of 9,9-bis(4-hydroxy-3-methylphenyl)fluorene and 20.5 parts of 1,1-bis(4-hydroxyphenyl)decane were used. Further, a molded sample and a plane-convex lens were evaluated in the same manner as in Example 1 except that they were molded under molding conditions shown in Table 2 and Table 3. The results are shown in Table 2 and Table 3.

The optical unit shown in Fig. 1 was fabricated by injection molding the first lens (1) from the above polycarbonate copolymer (I) and the second lens (2) (Abbe number of 56) from an alicyclic polyolefin (ZEONEX™480R of Zeon Corporation). The fabricated optical unit was set in the MTF (Modulation Transfer Function) measuring unit (8) of Acutelogic Corporation to measure the spatial frequency characteristics of an evaluation image (11) in accordance with the resolution measuring method specified in ISO12233. The results are shown in Table 4.

Example 3

A pellet of a polycarbonate copolymer (I) having characteristic properties shown in Table 1 (BCF:DED = 75

mol%: 25 mol%) was obtained in the same manner as in Example 1 except that 59.4 parts of 9,9-bis(4-hydroxy-3-methylphenyl)fluorene and 17.1 parts of 1,1-bis(4-hydroxyphenyl)decane were used. Further, a molded sample and a plane-convex lens were evaluated in the same manner as in Example 1 except that they were molded under molding conditions shown in Table 2 and Table 3. The results are shown in Table 2 and Table 3. The optical unit shown in Fig. 1 was fabricated by injection molding the first lens (1) from the above polycarbonate copolymer (I) and the second lens (2) (Abbe number of 56) from an alicyclic polyolefin (ZEONEX™480R of Zeon Corporation). The fabricated optical unit was set in the MTF (Modulation Transfer Function) measuring unit (8) of Acutelogic Corporation to measure the spatial frequency characteristics of an evaluation image (11) in accordance with the resolution measuring method specified in ISO12233. The results are shown in Table 4.

Comparative Example 1

A pellet of a polycarbonate copolymer having characteristic properties shown in Table 1 was obtained in the same manner as in Example 1 except that 31.7 parts of 9,9-bis(4-hydroxy-3-methylphenyl)fluorene and 41.0 parts of 1,1-bis(4-hydroxyphenyl)decane were used. Further, a molded sample and a plane-convex lens were evaluated in the same manner as in Example 1 except that they were molded under molding conditions shown in Table 2 and Table 3. The results are shown in Table 2 and Table 3. The optical unit shown in Fig. 1 was fabricated by injection molding the first lens (1) from the above polycarbonate copolymer (I) and the second lens (2) (Abbe number of 56) from an alicyclic polyolefin (ZEONEX™480R of Zeon Corporation). The fabricated optical unit was set in the MTF (Modulation Transfer Function) measuring unit (8) of Acutelogic Corporation to measure the spatial frequency characteristics of an evaluation image (11) in accordance with the resolution measuring method specified in ISO12233. The results are shown in Table 4.

Comparative Example 2

A pellet of a polycarbonate copolymer having characteristic properties shown in Table 1 was obtained in the same manner as in Example 1 except that 71.2 parts of 9,9-bis(4-hydroxy-3-methylphenyl)fluorene and 6.8 parts of 1,1-bis(4-hydroxyphenyl)decane were used. Further, a molded sample and a plane-convex lens were evaluated in the same manner as in Example 1 except that they were molded under molding conditions shown in Table 2 and Table 3. The results are shown in Table 2 and Table 3. The optical unit shown in Fig. 1 was fabricated by injection molding the first lens (1) from the above polycarbonate copolymer (I) and the second lens (2) (Abbe number of 56) from an alicyclic polyolefin (ZEONEX™480R of Zeon Corporation). The fabricated optical unit was set in the MTF (Modulation Transfer Function) measuring unit (8) of Acutelogic Corporation to measure the spatial frequency characteristics of an evaluation image (11) in accordance with the resolution measuring method specified in ISO12233. The results are shown in Table 4.

Comparative Example 3

A polycarbonate (Panlite AD-5503 of Teijin Chemicals, Ltd.) obtained from 2,2-bis(4-hydroxyphenyl)propane was used, and a molded sample and a plane-convex lens were evaluated in the same manner as in Example 1 except that they were molded under molding conditions shown in Table 2 and Table 3. The results are shown in Table 2 and Table 3. The optical unit shown in Fig. 1 was fabricated by injection molding the first lens (1) from the above polycarbonate resin (I) and the second lens (2) (Abbe number of 56) from an alicyclic polyolefin (ZEONEX™480R of Zeon Corporation). The fabricated optical unit was set in the MTF (Modulation Transfer Function) measuring unit (8) of Acutelogic Corporation to measure the spatial frequency characteristics of an evaluation image (11) in accordance with the resolution measuring method specified in ISO12233. The results are shown in Table 4.

Table 1

| Items | Composition | | | Specific viscosity | Tg | Water absorption coefficient | Photoelastic coefficient | Abbe number | Refractive index D-line | Orientation birefringence |
|---|---|---|---|---|---|---|---|---|---|---|
| | BCF ※1 | DED ※2 | BPA ※3 | | | | | | | |
| Unit | mol % | mol % | mol % | - | °C | % | $X10^{13}$ $cm^2$/dyne | - | - | $X10^{-3}$ |
| Ex. 1 | 65 | 35 | 0 | 0.26 | 158 | 0.08 | 35 | 25 | 1.621 | 0.5 |
| Ex. 2 | 70 | 30 | 0 | 0.26 | 164 | 0.11 | 33 | 24 | 1.625 | 0.1 |
| Ex. 3 | 75 | 25 | 0 | 0.26 | 170 | 0.13 | 31 | 23 | 1.628 | 0.5 |
| C. Ex. 1 | 40 | 60 | 0 | 0.28 | 114 | 0.06 | 46 | 26 | 1.612 | 3.9 |
| C. Ex. 2 | 90 | 10 | 0 | 0.26 | 192 | 0.18 | 29 | 22 | 1.631 | 1.5 |
| C. Ex. 3 | 0 | 0 | 100 | 0.28 | 142 | 0.16 | 71 | 30 | 1.585 | 13 |

Ex.: Example C.Ex.: Comparative Example

※1 BCF: 9,9-bis(4-hydroxy-3-methylphenyl)fluorene

※2 DED: 1,1-bis(4-hydroxyphenyl)decane

※3 BPA: 2,2-bis(4-hydroxyphenyl)propane

Table 2

| Items | Composition | | | Cylinder temperature | Mold temperature | Total light transmittance ($T_{550}$) | Phase difference ($Re_{550}$) |
|---|---|---|---|---|---|---|---|
| | BCF※1 | DED※2 | BPA※3 | | | | |
| Unit | mol% | mol% | mol% | °C | °C | % | nm |
| Example 1 | 65 | 35 | 0 | 310 | 115 | 89 | 3.3 |
| Example 2 | 70 | 30 | 0 | 320 | 120 | 89 | 1.3 |
| Example 3 | 75 | 25 | 0 | 325 | 125 | 89 | 3.5 |
| Comparative Example 1 | 40 | 60 | 0 | 280 | 100 | 88 | 28 |
| Comparative Example 2 | 90 | 10 | 0 | 350 | 140 | 89 | 22 |
| Comparative Example 3 | 0 | 0 | 100 | 300 | 115 | 90 | 72 |
| ※1 BCF: 9,9-bis(4-hydroxy-3-methylphenyl)fluorene<br>※2 DED: 1,1-bis(4-hydroxyphenyl)decane<br>※3 BPA: 2,2-bis(4-hydroxyphenyl)propane | | | | | | | |

Table 3

| Items | Composition | | | Cylinder temperature | Mold temperature | Evaluation of birefringence of plane-convex lens (phase difference) |
|---|---|---|---|---|---|---|
| | BCF※1 | DED※2 | BPA※3 | | | |
| Unit | mol% | mol% | mol% | °C | °C | nm |
| Example 1 | 65 | 35 | 0 | 360 | 150 | 45 |
| Example 2 | 70 | 30 | 0 | 360 | 150 | 30 |
| Example 3 | 75 | 25 | 0 | 360 | 150 | 44 |
| Comparative Example 1 | 40 | 60 | 0 | 340 | 120 | 120 |
| Comparative Example 2 | 90 | 10 | 0 | 360 | 150 | 128 |
| Comparative Example 3 | 0 | 0 | 100 | 350 | 125 | 170 |
| ※1 BCF: 9,9-bis(4-hydroxy-3-methylphenyl)fluorene<br>※2 DED: 1,1-bis(4-hydroxyphenyl)decane<br>※3 BPA: 2,2-bis(4-hydroxyphenyl)propane | | | | | | |

Table 4

| Items | Composition | | | Lens 1 | Lens 2 | Evaluation of lens unit (MTF characteristics) 10 lines/mm | Evaluation of lens unit (MTF characteristics) 30 lines/mm |
|---|---|---|---|---|---|---|---|
| | BCF※1 | DED※2 | BPA※3 | | | | |
| Unit | mol% | mol% | mol% | - | - | - | - |
| Example 1 | 65 | 35 | 0 | PC | APO | 0.8 | 0.6 |

(continued)

| Unit | mol% | mol% | mol% | - | - | - | - |
|---|---|---|---|---|---|---|---|
| Example 2 | 70 | 30 | 0 | PC | APO | 0.9 | 0.7 |
| Example 3 | 75 | 25 | 0 | PC | APO | 0.8 | 0.6 |
| Comparative Example 1 | 40 | 60 | 0 | PC | APO | 0.5 | 0.4 |
| Comparative Example 2 | 90 | 10 | 0 | PC | APO | 0.5 | 0.4 |
| Comparative Example 3 | 0 | 0 | 100 | PC | APO | 0.3 | 0.1 |

※1 BCF: 9,9-bis(4-hydroxy-3-methylphenyl)fluorene
※2 DED: 1,1-bis(4-hydroxyphenyl)decane
※3 BPA: 2,2-bis(4-hydroxyphenyl)propane
APO: alicyclic polyolefin (ZEONEX™480R of Zeon Corporation)
PC: polycarbonate copolymer (I)

Effect of the Invention

The lens of the present invention has small birefringence and a high refractive index. The lens of the present invention has excellent transparency and heat resistance. The optical unit of the present invention has high resolution as its color aberration is corrected.

Industrial Applicability

Since the optical unit of the present invention has good optical properties, it can be advantageously used as an optical unit for mobile telephones and digital cameras.

## Claims

**1.** A lens obtained from a polycarbonate copolymer (I) which is composed of a unit (A) represented by the following formula:

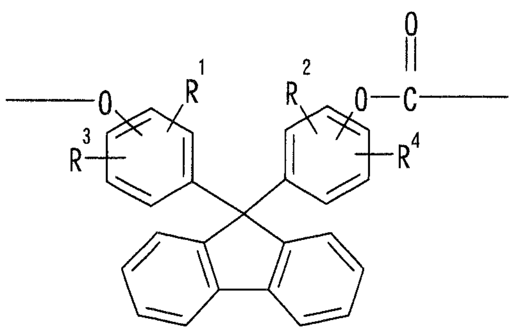

(A)

($R^1$ to $R^4$ are each independently a hydrogen atom, hydrocarbon group having 1 to 9 carbon atoms or halogen atom)
and a unit (B) represented by the following formula:

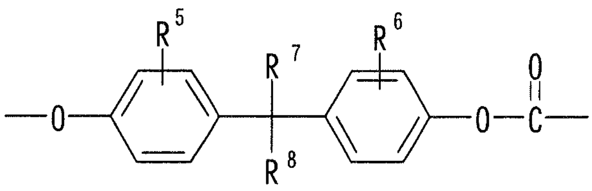

(B)

($R^5$ and $R^6$ are each independently a hydrogen atom, alkyl group having 1 to 6 carbon atoms, aryl group having 6 to 10 carbon atoms or alkoxy group having 1 to 6 carbon atoms, and $R^7$ and $R^8$ are each independently a hydrogen atom or alkyl group having 1 to 9 carbon atoms, with the proviso that the total number of carbon atoms of $R^7$ and $R^8$ is 9 or 10),

the content of the unit (A) being 50 to 80 mol% of the total of all the units.

2. The lens according to claim 1, wherein the content of the unit (A) is 65 to 75 mol% of the total of all the units of the polycarbonate copolymer (I).

3. The lens according to claim 1, wherein the unit (A) of the polycarbonate copolymer (I) is a unit derived from 9,9-bis (4-hydroxy-3-methylphenyl)fluorene.

4. The lens according to claim 1, wherein the unit (B) of the polycarbonate copolymer (I) is a unit derived from 1,1-bis (4-hydroxyphenyl)decane.

5. The lens according to claim 1, wherein the refractive index at a wavelength of 589 nm (Na-D line) of the polycarbonate copolymer (I) is 1.600 to 1.650.

6. The lens according to claim 1, wherein the polycarbonate copolymer (I) has an Abbe number of 20 to 35.

7. The lens according to claim 1, wherein the polycarbonate copolymer (I) has a refractive index at a wavelength of 589 nm (Na-D line) of 1.600 to 1.650 and an Abbe number of 20 to 35.

8. The lens according to claim 1, wherein the birefringence of the polycarbonate copolymer (I) is $0.3 \times 10^{-4}$ to $1 \times 10^{-4}$.

9. An optical unit which includes the lens of claim 1 and a plastic lens having an Abbe number of 45 to 60.

10. The optical unit according to claim 9, wherein the plastic lens having an Abbe number of 45 to 60 is obtained from an alicyclic polyolefin.

11. The optical unit according to claim 9, wherein the alicyclic polyolefin has a refractive index at a wavelength of 589 nm (Na-D line) of 1.450 to 1.550 and an Abbe number of 45 to 60.

12. The optical unit according to claim 9 which includes a plurality of plastic lenses having an Abbe number of 45 to 60.

13. The optical unit according to claim 9 which is used in mobile telephones.

14. The optical unit according to claim 9 which is used in digital cameras.

Fig. 1

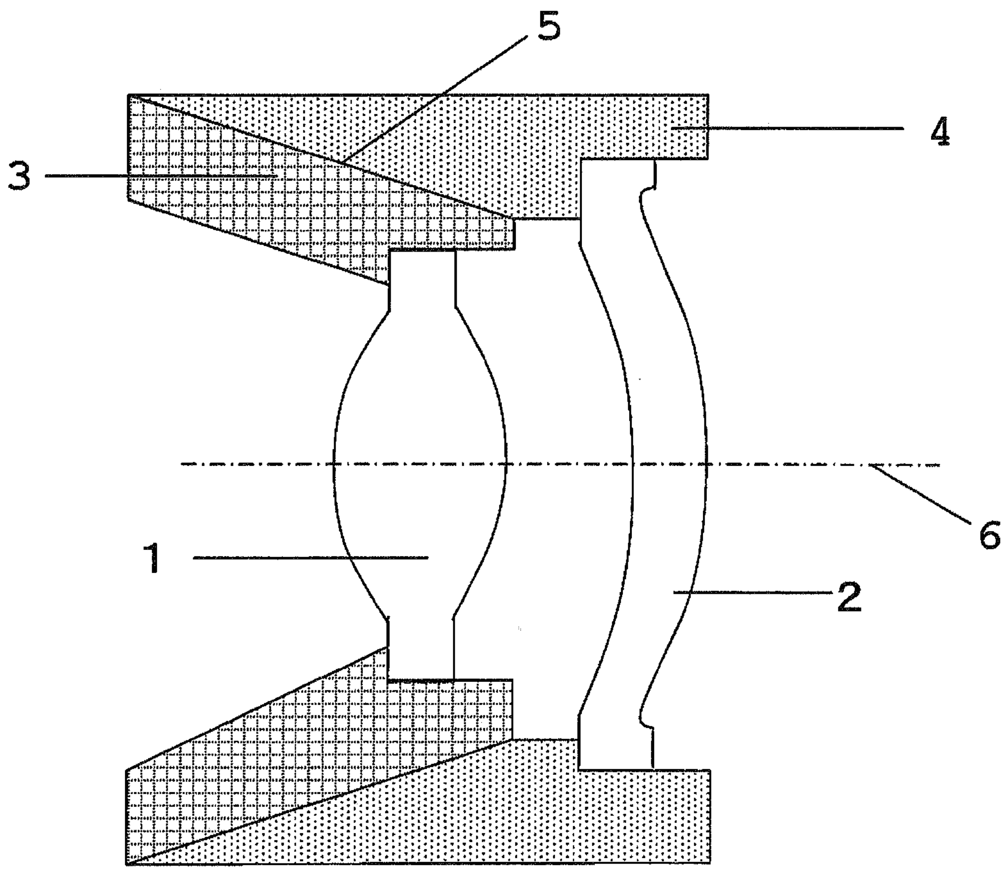

Fig. 2

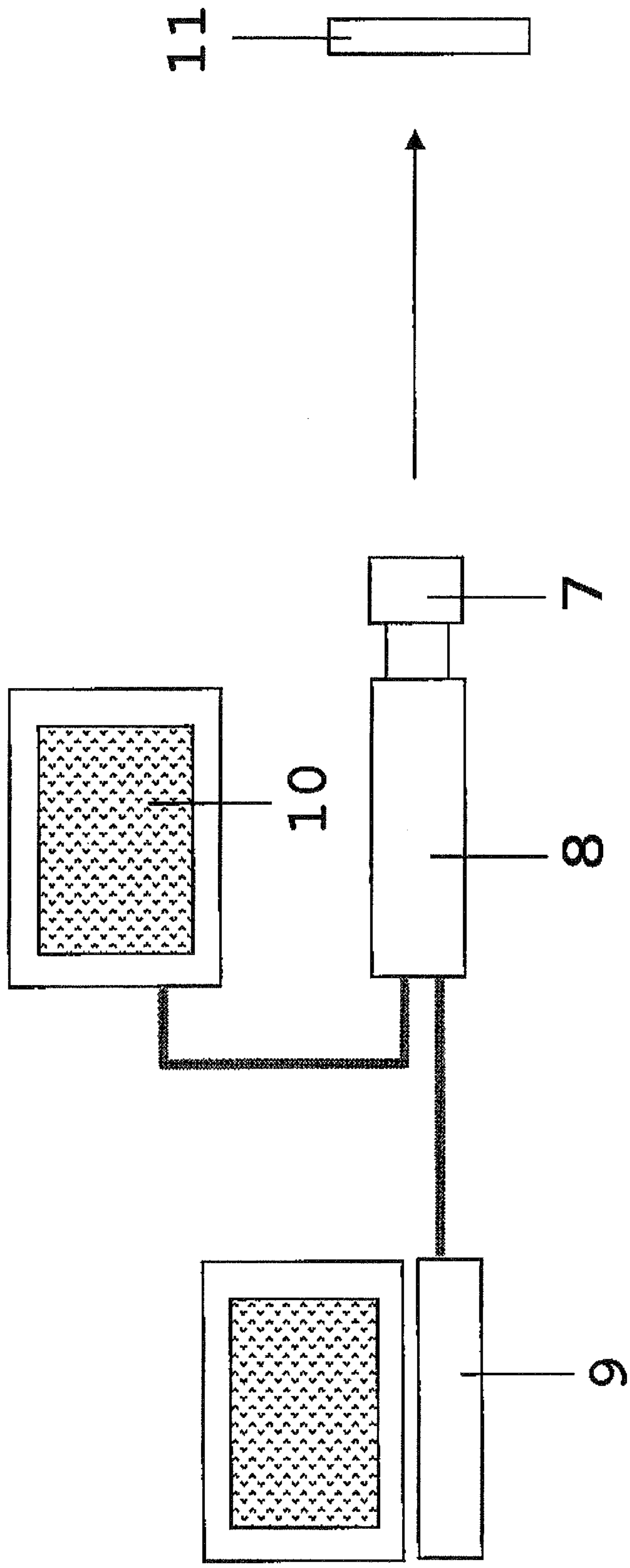

**INTERNATIONAL SEARCH REPORT**

International application No. PCT/JP2008/065614

A. CLASSIFICATION OF SUBJECT MATTER
*G02B1/04*(2006.01)i, *C08G64/16*(2006.01)i

According to International Patent Classification (IPC) or to both national classification and IPC

B. FIELDS SEARCHED

Minimum documentation searched (classification system followed by classification symbols)
G02B1/04, C08G64/16

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2006-328106 A (Teijin Chemicals Ltd.), 07 December, 2006 (07.12.06), Claims 1 to 3, 5 to 6; Par. No. [0081] (Family: none) | 1-8<br>9-14 |
| Y | JP 2005-309109 A (Fuji Photo Film Co., Ltd.), 04 November, 2005 (04.11.05), Claims 1 to 3; Par. Nos. [0001], [0070], [0079] (Family: none) | 9-14 |
| A | JP 2002-308978 A (Mitsubishi Gas Chemical Co., Inc.), 23 October, 2002 (23.10.02), Claims 1, 6 to 8; Par. No. [0037] (Family: none) | 1 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>20 November, 2008 (20.11.08) | Date of mailing of the international search report<br>02 December, 2008 (02.12.08) |
| Name and mailing address of the ISA/<br>Japanese Patent Office<br>Facsimile No. | Authorized officer<br><br>Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 61019630 A
- JP 63015822 A
- JP 5027101 A
- JP 6018701 A
- JP 2005272691 A
- JP 2006328106 A
- JP 2005309109 A
- JP 11021357 A
- JP 2001072870 A
- JP 2004051949 A
- JP 2001026693 A